# EUROPÄISCHE PATENTSCHRIFT

(11) **EP 0 563 409 B1**
(45) Veröffentlichungstag und Bekanntmachung des Hinweises auf die Patenterteilung: **10.11.1993**
(21) Anmeldenummer: 92105363.3
(22) Anmeldetag: 27.03.1992
(51) Int. Cl.: H01R 4/24, H02K 3/52

(54) **Elektrische Steckkontakt-Verbindung**
Electrical plug connector junction
Raccordement électrique à contact à fiches

(43) Veröffentlichungstag der Anmeldung: 06.10.1993
(73) Patentinhaber: SIEMENS AKTIENGESELLSCHAFT, 80333 München (DE)
(72) Erfinder: Bormann, Jürgen, W-8702 Rottendorf (DE); Paur, Uwe, Dipl.-Ing. (FH), W-8700 Würzburg (DE); Schmitt, Klaus, W-8722 Schwanfeld (DE)

(56) Entgegenhaltungen:
- EP-A- 0 287 263
- FR-A- 2 300 431
- US-A- 3 910 672

## Beschreibung

Die Erfindung bezieht sich auf eine elektrische Steckkontakt-Verbindung gemäß Oberbegriff des Anspruchs 1; eine derartige Steckkontakt-Verbindung mit Schneid-Klemmkontakten ist z.B. unter der Fachjargon-Bezeichnung "AMP Standard Mag-Mate" allgemein bekannt.

Bei der bekannten Steckkontakt-Verbindung mit Schneid-Klemmkontakten wird in eine isolierende Kunststoff-Kammer durch einen in deren eine Seitenwand eingelassenen Einführungsschlitz ein isolierter innerer Leiter, z.B. das Wicklungsende einer Motorwicklung, auf einen inneren, an den Kammersockel angespritzten Amboß aufgelegt und durch einen Ausführungsschlitz in der gegenüberliegenden Seitenwand der Kammer wieder herausgeführt; beim Einstecken eines im wesentlichen U-förmigen metallenen Schneid-Klemmkontaktes von der oberen geöffneten Seite der Kammer her werden der Amboß von den Seitenschenkeln des Schneid-Klemmkontaktes seitlich übergriffen und dabei der innere Leiter in Klemmschlitze der Seitenschenkel unter selbsttätiger Abisolierung eingedrückt und so ein elektrischer Kontakt zwischen dem inneren Leiter und dem Schneid-Klemmkontakt hergestellt wird. An den einen Seitenschenkel des Schneid-Klemmkontaktes ist an dessen freies Ende ein Federbügel derart angeformt, daß eine zum Anschluß für einen äußeren Leiter verwendbare Steckzunge zwischen den Federbügel und den gegenüberliegenden anderen Seitenschenkel des Schneid-Klemmkontaktes feststeckbar ist. Es ist auch bekannt, an die Steckzunge einen Flachstecker zum Aufstecken eines Gegenkontaktes des äußeren Leiters anzuformen und den Flachstecker bzw. die Steckzunge in ein umgebendes schützendes Steckergehäuse, z.B. aus Kunststoff, einzuspritzen.

Gemäß vorliegender Erfindung kann bei einer elektrischen Steckkontakt-Verbindung der eingangs genannten Art der Teile- und Montageaufwand dadurch wesentlich gemindert werden, daß der Amboß Teil eines zum Anschluß mit dem äußeren Leiter vorgesehenen und vom Klemmschlitz mitkontaktierten Kontaktteils ist; zweckmäßgerweise ist ein als Anschlußkontakt für einen äußeren Leiter vorgesehener Flachstecker direkt mit seinem inneren Ende als Amboßteil ausgebildet und im Sockel der Kammer gehalten. Weitere vorteilhafte Ausgestaltungen der Erfindung sind jeweils Gegenstand der Unteransprüche.

Durch die erfindungsgemäße Steckkontakt-Verbindung entfällt der Bauteile- bzw. Montageaufwand für die Halterung bzw. Kontaktierung zwischen einem Anschluß für eine äußere Anschlußleitung einerseits und dem SK-Kontakt (Schneid-Klemmkontakt) andererseits; ist für das äußere Anschlußende des Flachsteckers ein dieses schützende Steckergehäuse vorgesehen, so sind nach einer vorteilhaften Ausgestaltung der Erfindung das Steckergehäuse und die Kammer Teile eines einstückigen, insbesondere gespritzten, Kunststoffteils, wobei der Flachstecker durch Einspritzen seines inneren Endes in die Kammer und/oder das Steckergehäuse gehalten wird.

Da die Klemmschlitze handelsüblicher Schneid-Klemmkontakte derart ausgelegt sind, daß sie zumindest zwei übereinanderliegende Drähte aufnehmen und abisolieren können, ist in dieser Hinsicht keine Sonderkonstruktion für die erfindungsgemäße Steckkontakt-Verbindung notwendig, jedoch kann der an den einen Schenkel des SK-Kontaktes ansonsten bisher angeformte Federbügel zur Kontaktierung mit einer nach außen führenden Steckzunge entfallen.

Um eine gute und sichere Kontaktierung zwischen dem abzuisolierenden inneren Leiter und dem als Amboßteil dienenden inneren Ende des Flachsteckers in dem beide aufnehmenden Klemmschlitz des SK-Kontaktes zu gewährleisten, ist selbstverständlich das von dem Klemmschlitz aufzunehmende Ende des Flachsteckers dem Durchmesser des inneren Leiters angepaßt; falls für den Flachstecker ein Material mit im Vergleich zum Durchmesser des inneren Leiters geringerer Wandstärke zweckdienlich ist, wird nach einer Ausgestaltung der Erfindung in vorteilhafter Weise vorgesehen, daß amboßseitige innere Auflageende des Flachsteckers in Form einer Wulst der Kontur des aufgelegten inneren Leiters angepaßt ist.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1-3: in perspektivischer Darstellung Einzelteile eines kannten Schneid-Klemmkontaktes (SK-Kontaktes);
- FIG 4-6: die Bauteile gemäß FIG 1-3 in Schnittdarstellung mit in FIG 5,6 bereits eingelegtem inneren Leiter;
- FIG 7: in Schnittdarstellung einen bekannten Schneid-Klemmkontakt mit bestücktem, in einem Steckergehäuse gehaltenen Flachstecker für eine äußere Leitung;
- FIG 8: in Schnittdarstellung einen erfindungsgemäßen Schneid-Klemmkontakt mit als Amboß mitverwendetem eingegossenen Flachstecker;
- FIG 9: eine erste erfindungsgemäße Ausführung einer Steckkontakt-Verbindung in zu FIG 8 senkrechter Schnittdarstellung;
- FIG 10: eine zweite Ausführung einer erfindungsgemäßen Steckkontakt-Verbindung in zu FIG 8 senkrechter Schnittdarstellung;
- FIG 11: die Anordnung eines erfindungsgemäßen Vielfach-Steckkontaktes an der Stirnseite des Statorspaketes eines Elektromotors.

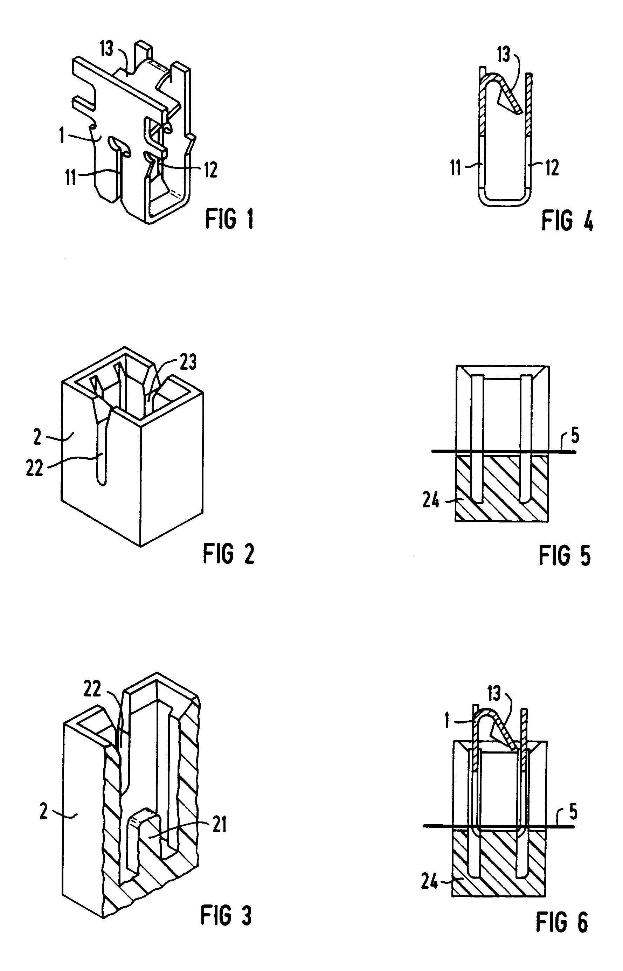

Bei der bekannten Steckkontakt-Verbindung gemäß FIG 1-7 wird in eine aus isolierendem Kunststoff gespritzte Kammer 2 durch einen Einführungsschlitz 22 in der einen Seitenwand der Kammer 2 ein isolierter innerer Leiter 5 eingeführt, über einen an den Sockel 24 der Kammer 2 axial vorstehend angeformten Amboß 21 gelegt und durch einen Ausführungsschlitz 23 in der gegenüberliegenden Seitenwand wieder herausgeführt. In die derart vorbestückte Kammer 2 wird von deren oberer offener Seite ein Schneid-Klemmkontakt 1 derart eingeführt, daß der Amboß 21 von den Seitenschenkeln des SK-Kontaktes 1 übergriffen und dabei der innere Leiter 5 in entgegen der Einsteckrichtung geöffnete Klemmschlitze 11,12 in den Seitenschenkeln des SK-Kontaktes 1 eingedrückt und dabei durch die andrückenden Klemmschlitzkanten abisoliert und somit elektrisch leitend mit dem SK-Kontakt 1 verbunden wird.

Im einzelnen zeigen dazu FIG 2,5 die Kammer 2 mit dem eingeführten und auf den Amboß 21 aufgelegten inneren Leiter 5 und FIG 6 die fertige Kontaktierung nach dem Einschieben des SK-Kontaktes 1 bis in seine Kontaktierungs-Betriebsstellung.

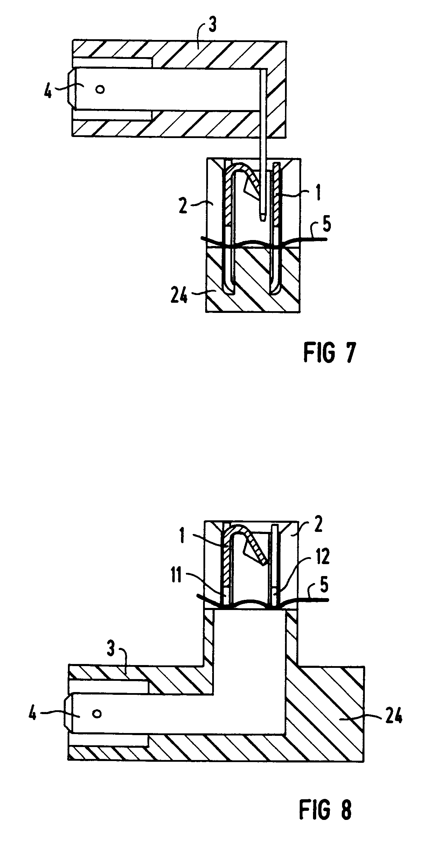

FIG 7 zeigt in Schnittdarstellung die Verbindung des inneren Leiters 5 über den SK-Kontakt 1 zu einem für einen Anschluß eines äußeren Leiters vorgesehenen, von einem Steckergehäuse 3 umgebenen Flachstecker 4 mittels einer Steckzunge, die zwischen dem einen Schenkel 12 des SK-Kontaktes 1 und einem von dem freien Ende des anderen Schenkels 11 des SK-Kontaktes 1 abgebogenen Federbügel 13 eingeklemmt ist.

FIG 8 zeigt in Gegenüberstellung zu FIG 7 bei vergleichbarem Schnittverlauf eine erfindungsgemäße Steckkontakt-Verbindung mit einem in einem Steckergehäuse 3 schützend aufgenommenem Flachstecker 4, wobei in vorteilhafter Weise das Steckergehäuse 3 und die Kammer 2 Teile eines einstückig gegossenen bzw. gespritzten Kunststoffteils sind und der mit seinem inneren Ende gleichzeitig als Amboß dienende Flachstecker 4 sowohl in dem Sockel 24 der Kammer 2 als auch in dem anschließenden Teil des Anschlußsteckers 3 gehaltert ist.

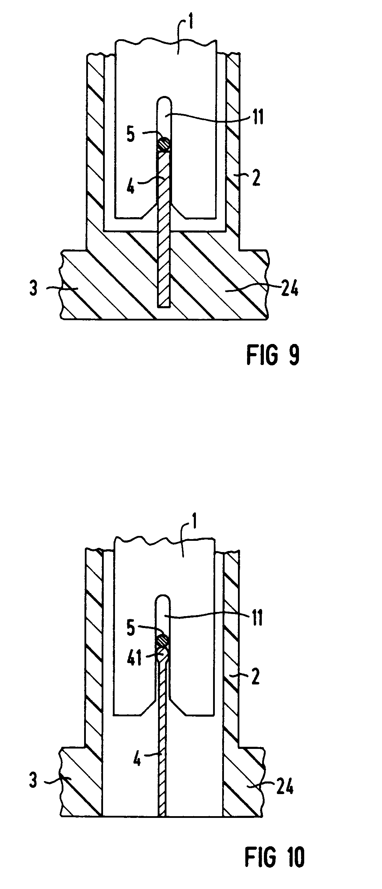

FIG 9,10 zeigen zwei Ausführungen einer erfindungsgemäßen Steckkontakt-Verbindung in zu FIG 8 senkrechter Schnittdarstellung. Dazu ist nicht wie im bekannten Fall der Amboß als einstückiger und damit elektrisch isolierender Kunststoffteil der Kammer, sondern durch das innere Steckerfahnenende des Flachsteckers 4 gebildet und die Steckerfahne durch Einspritzen in den Sockel 24 der Kammer 2 gehaltert. Das Steckerfahnenende des Flachsteckers 4 ist erfindungsgemäß derart ausgebildet, daß es ebenso wie der innere Leiter 5 im Klemmschlitz 11 bzw. 12 des SK-Kontaktes 1 kontaktierbar ist.

Gemäß dem Ausführungsbeispiel nach FIG 9 ist die Materialdicke des Flachsteckers 4 derart gewählt, daß das Steckerfahnenende über seine gesamte Länge im Klemmschlitz 11 die gleiche Materialstärke entsprechend dem inneren Leiter 5 aufweist. Gemäß Ausführungsbeispiel nach FIG 10 ist ausgehend von einer hinsichtlich der Beanspruchung des Flachsteckers maßgeblichen geringeren Materialstärke des Flachsteckers 4 eine Kontaktierung mit dem SK-Kontakt 1 und eine Amboßauflage für den inneren Leiter 5 dadurch gewährleistet, daß der Flachstecker 4 an seinen Steckerfahnenenden in Form einer Wulst 41 entsprechend dem Durchmesser des inneren Leiters 5 aufgeweitet ist; um in diesem Fall eine einfache Entformung der aus Kunstoff spritzgegossenen Kammer 2 gewährleisten zu können, ist Weise eine Entformungsteilungsebene der Kammer 2 quer zu der Wulst 41 mit einem Entformungsfreiraum unterhalb der Wulst 41 im ansonsten das innere Ende des Flachsteckers 4 aufnehmenden Sockel 24 der Kammer 2 vorgesehen.

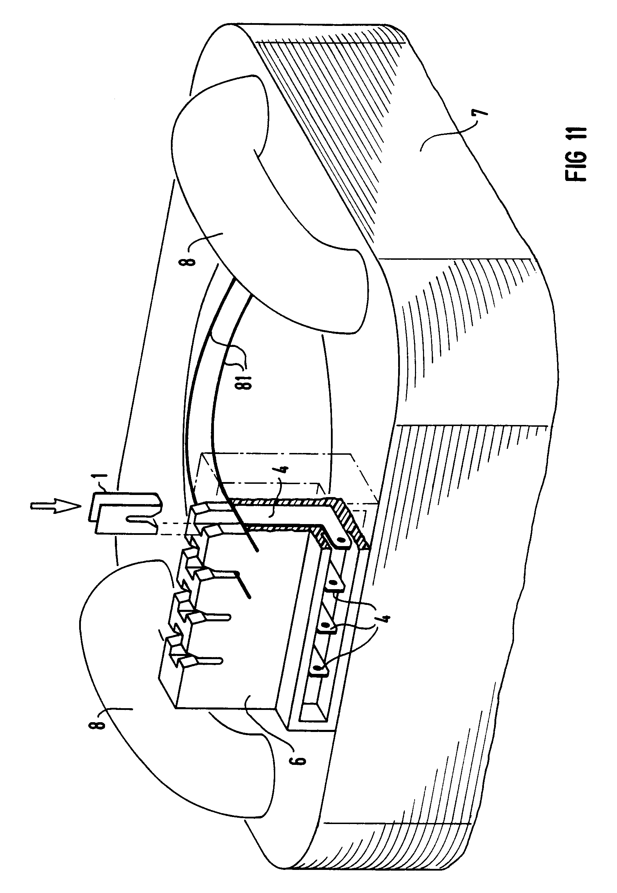

FIG 11 zeigt in perspektivischer Teilansicht einen an einem mit einer Motorwicklung 8 versehenen Statorblechpaket 7 stirnseitig gehalterten Vielfachstecker 6 mit mehreren erfindungsgemäß ausgebildeten Steckkontakt-Verbindungen. Jede dieser dort gezeigten vier Steckkontakt-Verbindungen des Vielfachsteckers 6 weist einen Flachstecker 4 mit Amboßteil auf, auf dem jeweils ein motorseitiger Leiter, z.B. Motorwicklungsdrähte 81, aufliegen und durch Aufschieben bzw. Einstecken eines SK-Kontaktes 1 in den jeweiligen Kammerteil des Vielfachsteckers 6 mit dem Flachstecker 4 kontaktierbar ist. FIG 11 zeigt darüber hinaus eine durch die erfindungsgemäße Steckkontakt-Verbindung mögliche Konstruktionsvereinfachung des SK-Kontaktes 1, der nicht mehr eine von einem oberen Schenkel gegen den benachbarten Schenkel des U-förmigen SK-Kontaktes 1 abgebogenen Federbügel zur Kontaktierung eines gesondert einzusteckenden Kontaktmittels für eine äußere Leitung benötigt.

## Patentansprüche

1. Elektrische Steckkontakt-Verbindung mit einem in eine isolierende Kammer (2) einsteckbaren und dabei einen auf einem Amboß in der Kammer (2) aufliegenden, querverlaufenden isolierten inneren Leiter (5) durch Aufnahme in zumindest einen Klemmschlitz (11;12) abisolierenden SK-Kontakt (1) sowie mit einem mit dem SK-Kontakt (1) verbundenen Anschluß zu einem äußeren Leiter, **dadurch gekenn****zeichnet,** daß der Amboß Teil eines zum Anschluß mit einem äußeren Leiter vorgesehenen und vom Klemmschlitz (11;12) mitkontaktierten Kontaktteils (Flachstecker 4) ist.

2. Elektrische Steckkontakt-Verbindung nach Anspruch 1, **dadurch gekennzeichnet,** daß ein als Anschlußkontakt vorgesehener Flachstecker (4) mit seinem inneren Ende als Amboßteil ausgebildet und im Sockel (24) der Kammer (2) gehalten ist.

3. Elektrische Steckkontakt-Verbindung mit einem zumindest das äußere Anschlußende des Flachsteckers (4) aufnehmenden Steckergehäuse (3) nach Anspruch 1 oder 2, **dadurch** **gekennzeichnet,** daß das Steckergehäuse (3) und die Kammer (2) Teile eines einstückigen Kunststoffteils sind.

4. Elektrische Steckkontakt-Verbindung nach einem der Ansprüche 1-3, **dadurch gekennzeichnet,** daß das innere Ende des Flachsteckers (4) in die Kammer (2) und/oder das Steckergehäuse (3) eingegossen bzw. eingespritzt sind.

5. Elektrische Steckkontakt-Verbindung nach einem der Ansprüche 1-4, **dadurch gekennzeichnet,** daß das als Auflage für den querverlaufenden inneren Leiter (5) dienende innere Ende des Flachsteckers (4) mit einer der Form des inneren Leiters (5) entsprechenden, gegenüber dem übrigen Steckzungenverlauf verdickten Wulst (41) versehen ist.

6. Elektrische Steckkontakt-Verbindung nach Anspruch 5, **gekennzeichnet durch** eine Entformungsteilungsebene der Kammer (2) quer zu der Wulst (41) und einem Entformungsfreiraum unterhalb der Wulst (41) im ansonsten das innere Ende des Flachsteckers (4) aufnehmenden Sockel (24) der Kammer (2).

7. Elektrische Steckkontakt-Verbindung nach einem der Ansprüche 1-6 als Teil eines an einem ruhenden Teil, insbesondere Statorpaket (7) eines Elektromotors gehaltenen Vielfachsteckers (6) zur Verbindung von motorseitigen Leitern, z.B. Motorwicklungsdrähten (81), mit Flachsteckern (4) für einen äußeren Leiter.

## Claims

1. An electrical plug-in contact connector having an insulation-piercing contact (1), which can be inserted into an insulating chamber (2) and in the process bares a transversely extending insulated inner conductor (5) resting on an anvil in the chamber (2) by admission in at least one clamping slot (11;12), and having a terminal to an outer conductor, the terminal being connected to the insulation-piercing contact (1), characterized in that the anvil is part of a contact part (flat-pin plug 4) provided for connection with an outer conductor and is also contacted by the clamping slot (11;12).

2. An electrical plug-in contact connector according to claim 1, characterized in that a flat-pin plug (4) provided as terminal contact is constructed with its inner end as anvil part and is held in the base (24) of the chamber (2).

3. An electrical plug-in contact connector having a plug housing (3) accommodating at least the outer terminal end of the flat-pin plug (4) according to claim 1 or 2, characterized in that the plug housing (3) and the chamber (2) are parts of a one-piece plastics part.

4. An electrical plug-in contact connector according to one of claims 1-3, characterized in that the inner end of the flat-pin plug (4) is cast or injected into the chamber (2) and/or the plug housing (3).

5. An electrical plug-in contact connector according to one of claims 1-4, characterized in that the inner end of the flat-pin plug (4) serving as the support for the transversely extending inner conductor (5) is provided with a bead (41) corresponding to the form of the inner conductor (5) and thickened compared with its remaining extent.

6. An electrical plug-in contact connector according to claim 5, characterized by a parting line of the chamber (2) at right angles to the bead (41) and a mould-removal free space underneath the bead (41) in the base (24) of the chamber (2) otherwise incorporating the inner end of the flat-pin plug (4).

7. An electrical plug-in contact connector according to one of claims 1-6 as part of a multiple plug (6) supported on a static part, in particular stator plates (7) of an electric motor for the connection of motor-side conductors, for example motor winding wires (81), with flat-pin plugs (4) for an outer conductor.

## Revendications

1. Liaison électrique à contacts à enfichage comportant un contact SK (1) qui peut être enfiché dans une chambre isolante (2) et qui dénude, sous l'effet de son logement dans au moins une fente de serrage (11;12), un conducteur intérieur isolé transversal (5), qui est disposé sur une enclume dans la chambre (2), et une borne, qui est reliée au contact (SK) et établit le raccordement avec un conducteur extérieur, caractérisée par le fait que l'enclume fait partie d'une pièce de contact (connecteur plat 4), qui est prévue pour le raccordement d'un conducteur extérieur et avec laquelle est en contact la fente de serrage (11;12).

2. Liaison électrique à contact à enfichage suivant la revendication 1, caractérisée par le fait que l'extrémité intérieure d'un connecteur plat (4) prévu en tant que contact de raccordement, est agencé sous la forme d'une enclume et que ce connecteur est retenu dans le socle (24) de la chambre (2).

3. Liaison électrique à contact à enfichage comportant un boîtier de connecteur (3), qui loge au moins l'extrémité extérieure de raccordement du connecteur plat (4) selon la revendication 1 ou 2, caractérisée en ce que le boîtier (3) du connecteur et la chambre (2) font partie d'une pièce en matière plastique monobloc.

4. Liaison électrique à contact à enfichage suivant l'une des revendications 1-3, caractérisée par le fait que l'extrémité intérieure du connecteur plat (4) est fixée par coulée ou moulage par injection dans la chambre (2) et/ou le boîtier (3) du connecteur.

5. Liaison électrique à contact à enfichage suivant l'une des revendications 1-4, caractérisé que l'extrémité intérieure, qui est utilisée en tant que support pour le conducteur intérieur transversal (5), du connecteur plat (4) est pourvue d'un rebord (41), qui correspond à la forme du conducteur intérieur (5) et qui est épaissi par rapport au reste de la languette enfichable.

6. Liaison électrique à contact à enfichage suivant la revendication 5, caractérisé par un plan de division au démoulage de la chambre (2), qui s'étend transversalement par rapport au rebord (41), et une chambre de libération lors du démoulage située au-dessous du rebord (41) dans le socle (24) de la chambre (2), qui loge par ailleurs l'extrémité intérieure du connecteur plat (4).

7. Liaison électrique à contact à enfichage suivant l'une des revendications 1-6, en tant que partie d'un connecteur multiple (6) qui est maintenu sur une pièce fixe, notamment un paquet statorique (7) d'un moteur électrique, pour établir la liaison de conducteurs situés côté moteur, c'est-à-dire de fils (81) d'enroulement du moteur, à des connecteurs plats (4) pour des conducteurs extérieurs.
